## Europäisches Patentamt
## European Patent Office
## Office européen des brevets

(19)

(11) Veröffentlichungsnummer: **0 249 278**
**B1**

(12) **EUROPÄISCHE PATENTSCHRIFT**

(45) Veröffentlichungstag der Patentschrift:
**07.03.90**

(21) Anmeldenummer: **87201034.3**

(22) Anmeldetag: **02.06.87**

(51) Int. Cl.⁴: **C03B 20/00, C04B 38/00,**
**C03B 32/00, C04B 35/64,**
**C03B 37/012, C04B 35/00,**
**H01J 5/04**

(54) **Verfahren zur Herstellung von Glas- oder keramischen Körpern.**

(30) Priorität: **10.06.86  DE 3619510**

(43) Veröffentlichungstag der Anmeldung:
**16.12.87 Patentblatt 87/51**

(45) Bekanntmachung des Hinweises auf die Patenterteilung:
**07.03.90 Patentblatt 90/10**

(84) Benannte Vertragsstaaten:
**AT BE DE FR GB IT NL SE**

(56) Entgegenhaltungen:
**EP-A- 0 167 054**
**DE-A- 3 511 439**
**DE-A- 3 511 453**
**GB-A- 2 067 180**

(73) Patentinhaber: **Philips Patentverwaltung GmbH,**
**Wendenstrasse 35 Postfach 10 51 49,**
**D-2000 Hamburg 1(DE)**
(84) Benannte Vertragsstaaten: **DE**

(73) Patentinhaber: **N.V. Philips' Gloeilampenfabrieken,**
**Groenewoudseweg 1, NL-5621 BA Eindhoven(NL)**
(84) Benannte Vertragsstaaten: **BE FR GB IT NL SE AT**

(72) Erfinder: **Clasen, Rolf, Dipl.-Phys., Dr.,**
**Schlossparkstrasse 36, D-5100 Aachen(DE)**

(74) Vertreter: **Nehmzow-David, Fritzi-Maria et al, Philips**
**Patentverwaltung GmbH**
**Wendenstrasse 35 Postfach 10 51 49,**
**D-2000 Hamburg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren, wie es im Oberbegriff des Patentanspruches 1 angegeben ist.

Für die Herstellung von optischen Wellenleitern, aber auch für die Herstellung von Lampenkolben, insbesondere für Halogen- oder Gasentladungslampen, sind Quarzgläser erforderlich, die praktisch keine Verunreinigungen mehr aufweisen und die insbesondere nahezu wasserfrei sind. Die Herstellung derartiger Gläser über den konventionellen Weg der Herstellung aus einer Glasschmelze stößt wegen vorhandener Verunreinigungen auf Grenzen.

Aus diesem Grund wurde für die erwähnten Anwendungszwecke dazu übergegangen, hochreine Gläser durch Sinterung von porösen Grünkörpern aus feinstteiligen Quarzglaspartikeln mit einer Teilchengröße im Bereich von 1 bis 500 nm herzustellen. Die Grünkörper können, da sie porös und damit gasdurchlässig sind, einem Reinigungsschritt in einer erhitzten, mit vorhandenen Verunreinigungen reagierenden Gasatmosphäre unterzogen werden und werden im gereinigten Zustand anschließend bei Temperaturen um 1500°C zu transparentem Glas gesintert. Störende Verunreinigungen sind z.B. OH-Ionen und Ionen und Partikel der Übergangsmetalle.

Derartige Grünkörper können aus Suspensionen über eine Sol-Gel-Umwandlung geformt werden, es können jedoch auch poröse Grünkörper aus pulverförmigem Ausgangsmaterial verformt werden, z.B. durch Zentrifugieren und anschließendes Formstabilisieren. Ein Verfahren zur Herstellung von Glaskörpern, die als Vorform für die Herstellung von optischen Wellenleitern verwendet werden sollen, bei dem offenporige Grünkörper mit einem auf eine Temperatur im Bereich von 600 bis 900°C erhitzten chlorhaltigen Reinigungsgas gereinigt werden, ist mit EP-A 0 197 585 vorgeschlagen worden, einem Dokument, das unter Art. 54(3) und (4) für die benannten Staaten DE, FR, GB, IT, NL und SE zu berücksichtigen ist. Dieses Verfahren hat sich insbesondere zur Entfernung von OH-Ionen bewährt. Der wesentliche Gedanke dieses Reinigungsprozesses besteht darin, daß vorhandene Verunreinigungen mittels Festkörperdiffusion an die Oberfläche der sehr kleinen Quarzglasteilchen diffundieren, dort mit der chlorhaltigen Atmosphäre zu flüchtigen Verbindungen reagieren und durch die offenen Poren an die Oberfläche des Formkörpers gelangen, forciert durch periodische Druckgradienten.

Problematisch ist bei diesem Verfahren, daß Verunreinigungen, die von Beginn an auf der Oberfläche der hochdispersen Quarzglasteilchen sitzen, nicht schlagartig reagieren und abtransportiert werden, sondern genügend Zeit haben, wegen der hohen Temperaturen des Reinigungsprozesses auch in das Material hinein zu diffundieren. Dies kann einen Reinigungsprozeß wesentlich erschweren.

Bei den genannten Verunreinigungen handelt es sich z.B. um Ionen und Partikel von Kupfer, Vanadium, Chrom, Molybdän, Wolfram, Mangan, Eisen, Kobalt oder Nickel, die durch mechanischen Abrieb beim Mischen und Extrudieren des Ausgangsmaterials zur Herstellung eines Grünkörpers eingeschleppt wurden und sich auf der Oberfläche der am Aufbau der Ausgangsmasse beteiligten Pulverteilchen angelagert haben.

Aus GB-A 2 067 180 war ein Verfahren zur Herstellung von Glaskörpern bekannt, bei dem aus dem Ausgangsmaterial ein offenporiger Grünkörper geformt wird, der in einem mit im Grünkörper vorhandenen Verunreinigungen reagierenden, vorzugsweise auf eine Temperatur im Bereich von 950 bis 1250°C erhitzten, eine Schwefel-Sauerstoff-Halogen-Verbindung wie z.B. $SOCl_2$ enthaltenden Reinigungsgas einem Reinigungsprozeß unterzogen und gesintert wird. Dieses bekannte Verfahren soll dazu dienen, den Grünkörper von OH-Ionen zu reinigen, nicht jedoch dazu, metallische Verunreinigungen zu entfernen.

Mit EP-A 0 196 719, (Art 54(3) und (4)), ganz allgemein vorgeschlagen, poröse, zur Herstellung von Glaskörpern verwendete Grünkörper auf eine Temperatur von 800°C zu erhitzen und zur Entfernung von Verunreinigungen, insbesondere Wasser und Übergangsmetalle, 2 Stunden einem mit $SOCl_2$ gesättigten $O_2$-Gasstrom auszusetzen.

Der Erfindung liegt die Aufgabe zugrunde, daß mit EP-A 0 197 585 vorgeschlagene Verfahren in der Weise zu verbessern, daß bei dem Reinigungsprozeß eine Diffusion von Verunreinigungen in den zu reinigenden Grünkörper hinein weitgehend unterbunden wird.

Diese Aufgabe wird mit den Maßnahmen gemäß dem Kennzeichen des Patentanspruches 1 gelöst.

Der Erfindung liegt die Erkenntnis zugrunde, daß eine Diffusion von Verunreinigungen in den zu reinigenden Grünkörper hinein weitgehend unterbunden werden kann, wenn der Reinigungsprozeß bei relativ niedrigen Temperaturen durchgeführt werden kann.

Voraussetzung hierfür ist, daß bei relativ niedrigen Temperaturen flüchtige Verbindungen der zu entfernenden Verunreinigungen gebildet werden müssen.

Bei Transportmessungen von $Fe_2O_3$ in Thionylchlorid ($SOCl_2$) bei unterschiedlichen Temperaturen zeigte es sich überraschend, daß sich im Temperaturbereich zwischen 300 und 400°C sehr flüchtige Sauerstoff-Schwefel-Chlor-Komplexverbindungen bilden. In gleicher Weise verhalten sich andere Elemente wie z.B. Kupfer, Vanadium, Chrom, Molybdän, Wolfram, Mangan, Kobalt oder Nickel. Daher ist es möglich, solche Verunreinigungen in einem Reinigungsgas, bestehend aus einem Trägergas (z.B. Sauerstoff, wenn oxidische Ausgangsmaterialien eingesetzt werden) und einer Schwefel-Sauerstoff-Halogen-Verbindung (z.B. Thionylchlorid oder Sulfurylchlorid), mit der das Trägergas gesättigt wird, im Temperaturbereich von 250 bis 500°C, vorzugsweise im Temperaturbereich von 350 bis 450°C, reaktiv zu verflüchtigen.

Nach einer vorteilhaften Weiterbildung des Verfahrens nach der Erfindung wird der Reinigungszyklus mit den Schritten Durchspülen der Vorrichtung mit Reinigungsgas und Evakuieren der Vorrichtung, bis die im Grünkörper enthaltenen Gase entfernt sind, wiederholt, bis eine hinreichend kleine Verunreinigungskonzentration über den gesamten Querschnitt des Grünkörpers erreicht ist. Hiermit ist der Vorteil verbunden, daß der Reinigungsprozeß bei kleinen Porendurchmessern des Grünkörpers beschleunigt werden kann.

Es ist mit dem vorliegenden Verfahren selbstverständlich auch möglich, nicht nur vorgeformte, offenporige Grünkörper zu reinigen, sondern auch schon das pulverförmige Ausgangsmaterial.

In den Fällen, wo aus diesem pulverförmigen Ausgangsmaterial anschließend ein offenporiger Formkörper hergestellt wird, ist es jedoch effektiver, den Reinigungsschritt erst direkt vor dem endgültigen Kompaktieren des Formkörpers, z.B. durch Sintern, durchzuführen, um Verunreinigungen in einem Schritt zu eliminieren.

Nach einer vorteilhaften Weiterbildung des Verfahrens nach der Erfindung wird für einen Reinigungszyklus eine Menge an Reinigungsgas eingespült, die größer ist als das Porenvolumen des zu reinigenden Grünkörpers. Hierdurch wird sichergestellt, daß das gesamte Porenvolumen des offenporigen Grünkörpers bei jedem Zyklus mit Reinigungsgas gefüllt werden kann.

Nach vorteilhaften Weiterbildungen des Verfahrens nach der Erfindung wird mit Zyklen in einem Takt von Spüldauer : Evakuierungsdauer im Bereich von 1:1 bis 20:1, vorzugsweise mit einem Takt von 5:1 mit einer Spüldauer von 5 min und einer Evakuierungsdauer von 1 min gearbeitet.

Bei einer Dauer von insgesamt nur einer Stunde wird ein so hochreiner Grünkörper erhalten, daß ein aus einem solchen Grünkörper anschließend gesinterter Glaskörper über seinen gesamten Querschnitt eine Konzentration an metallischen Verunreinigungen von < 1 ppm aufweist.

Die mit der Erfindung erzielbaren Vorteile bestehen unter anderem darin, daß nach einem Reinigungsprozeß relativ kurzer Dauer reproduzierbar höchst reine Grünkörper für die Herstellung von Quarzglaskörpern erhalten werden können, selbst wenn hochverdichtete poröse Grünkörper gereinigt werden müssen.

Durch die Möglichkeit, den Reinigungsprozeß bei relativ niedrigen Temperaturen durchführen zu können, ergibt sich der weitere Vorteil, daß das Eindiffundieren von Verunreinigungen in den Grünkörper oder in pulverförmiges Ausgangsmaterial verhindert wird.

Ein weiterer großer Vorteil für eine großtechnische Fertigung, also eine Fertigung nicht unter Laborbedingungen, ist, daß Maschinen (Mischer, Kneter, Extruder) aus nicht vergüteten (unbeschichteten) Edelstählen eingesetzt werden können.

Das vorliegende Verfahren ist geeignet zur Reinigung von porösen keramischen Grünkörpern und zur Reinigung von Grünkörpern aus hochdispersen $SiO_2$-Partikeln, die als Vorform für die Herstellung von optischen Wellenleitern oder für die Herstellung von Lampenkolben, insbesondere für Halogen- oder Gasentladungslampen, eingesetzt werden.

Die Erfindung wird anhand eines Ausführungsbeispieles beschrieben.

Ein Grünkörper wurde durch Zentrifugieren von $SiO_2$-Teilchen eines Teilchendurchmessers im Bereich von 10 bis 100 nm mit einem überwiegenden Anteil von Teilchen eines Teilchendurchmessers von 40 nm in einer Form hergestellt. Dazu wurden 200 g hochdisperses $SiO_2$-Pulver in 300 cm³ wässeriger 0,5%iger Ammoniaklösung verrührt und 10 min lang unter Ultraschalleinwirkung bei einer Frequenz f=35 kHz dispergiert. Eine solche Suspension wurde in einer großen Laborzentrifuge 15 min bei 10 000 g zentrifugiert, die klare Lösung abgegossen und die sedimentierten Körper über 25 h ansteigend 1 h bei 120°C getrocknet. Auf diese Weise wurden rohrförmige Grünkörper einer Dichte von 45% der Dichte von Quarzglas mit einem Innendurchmesser von 8 mm, einem Außendurchmesser von 16 mm und einer Länge von 500 mm hergestellt. Derartige Grünkörper wiesen Verunreinigungen insbesondere an Eisen von 50 ppm auf.

Diese Grünkörper wurden in einem Ofen bei einer Temperatur von 420°C 2 h gereinigt, wobei ein mit Thionylchlorid bei einer Temperatur von 20°C gesättigter $O_2$-Gasstrom von $10^{-3}$m³/min (bezogen auf Normalbedingungen) 5 min durch den Ofen gespült wurde und der Ofen anschließend, nach dieser Füllung mit Reinigungsgas, 1 min evakuiert wurde; es ergibt sich damit ein Takt von Fülldauer zu Evakuierungsdauer von 5:1. Dieser Zyklus wurde über eine Dauer von 1 h wiederholt. Der unter diesen Bedingungen gereinigte Grünkörper wurde anschließend bei einer Temperatur von 1500°c in einer Heliumatmosphäre mit 2 Vol.% Chlorgaszusatz gesintert, wobei der Grünkörper mit einer Absenkgeschwindigkeit von 3 mm/min durch den Ofen geführt wurde. Es wurde ein transparentes, blasen- und schlierenfreies Glasrohr eines Durchmessers von 12,25 mm mit metallischen Verunreinigungen über den gesamten Querschnitt von < 1 ppm erhalten. Der erhaltene Quarzglaskörper hatte eine Dichte von 2,2 g/cm³ und einen Brechungsindex $n_D$ = 1,4590.

Als Ausführungsbeispiel wurde die Herstellung von hochreinen Quarzglasrohren beschrieben. Das vorliegende Verfahren läßt sich jedoch für alle Technologien anwenden, bei denen aus pulverförmigen oxidischen Ausgangsmaterialien hochreine Formkörper hergestellt werden müssen; hier ist z.B. zu denken an die Herstellung von hochreinen Formkörpern aus Aluminiumoxid $Al_2O_3$ oder auch an die Herstellung von elektronischen Bauelementen aus Keramik, z.B. Kondensatoren.

Bei allen diesen genannten Verfahren stellt es einen erheblichen Vorteil insbesondere für eine großtechnische Fertigung dar, daß mit dem vorliegenden Verfahren darauf verzichtet werden kann, die Bearbeitungswerkzeuge (Kneter, Mischer, Extruder) extra zu beschichten (z.B. durch Aufbringen von $Al_2O_3$ mittels Kathodenzerstäubung auf die Werkzeugoberfläche), um keinen metallischen Abrieb in die mit den Vorrichtungen zu bearbeitenden Massen gelangen zu lassen. Da keramische Massen eine gewisse Schleifwirkung auf die Werkzeugoberflächen ausüben, müssen derartige teure Beschichtungen in der Regel nach wenigen Durchgängen erneuert werden.

Die nachstehende Tabelle verdeutlicht, wie oberflächlich angelagerte metallische Verunreinigungen mit dem vorliegenden Verfahren aus einer Strangpreßmasse bestehend aus 60 Gew.% $SiO_2$, 5 Gew.% eines wasserlöslichen Bindemittels und 35 Gew.% $H_2O$ entfernbar sind; die Messungen wurden mittels einer Neutronenaktivierungsanalyse durchgeführt.

| Art der Verunreinigung | Strangpreßmasse | |
|---|---|---|
| | Verunreinigungen vor der Reinigung /ppb/ | Verunreinigungen nach der Reinigung /ppb/ |
| Cu | 300 | 48 |
| Cr | 12000 | 93 |
| Mo | 1700 | 17 |
| W | 15 | 0,7 |
| Fe | 54000 | 890 |
| Co | 19 | 3,6 |
| Ni | 1500 | 21 |

**Patentansprüche für die Vertragsstaaten: AT, BE**

1. Verfahren zur Herstellung von Glas- oder keramischen Körpern, bei dem aus dem Ausgangsmaterial ein offenporiger Grünkörper geformt wird, der in einem mit im Grünkörper vorhandenen Verunreinigungen reagierenden, erhitzten, eine Schwefel-Sauerstoff-Halogen-Verbindung enthaltenden Reinigungsgas einem Reinigungsprozeß unterzogen und gesintert wird, dadurch gekennzeichnet, daß metallische Verunreinigungen in Form von Elementen der Gruppen Ib, Va, VIa, VIIa und/oder VIII des Periodischen Systems der Elemente (PSE) bei einer Temperatur im Bereich von 200 bis 500°C in flüchtige Komplexverbindungen überführt werden dadurch, daß die Vorrichtung, in der sich der zu reinigende Grünkörper befindet, mit strömendem Reinigungsgas in Form eines mit der Schwefel-Sauerstoff-Halogen-Verbindung gesättigten Trägergases durchspült, dann abgeschlossen und anschließend solange evakuiert wird, bis die in dem offenporigen Grünkörper enthaltenen Gase in Form von Reinigungsgas und gasförmigen Reaktionsprodukten entfernt sind.

EP 0 249 278 B1

2. Verfahren nach Anspruch 1, dadurch gekennzeichnet, daß zur Reinigung von Grünkörpern aus oxidischen Ausgangsmaterialien als Trägergas Sauerstoff eingesetzt wird.

3. Verfahren nach Anspruch 1, dadurch gekennzeichnet, daß metallische Verunreinigungen in Form Kupfer, Vanadium, Chrom, Molybdän, Wolfram, Mangan, Eisen, Kobalt oder Nickel reaktiv verflüchtigt werden.

4. Verfahren nach Anspruch 3, dadurch gekennzeichnet, daß als Schwefel-Sauerstoff-Halogen-Verbindung Thionylchlorid eingesetzt wird.

5. Verfahren nach Anspruch 3, dadurch gekennzeichnet, daß als Schwefel-Sauerstoff-Halogen-Verbindung Sulfurylchlorid eingesetzt wird.

6. Verfahren nach den Ansprüchen 1 bis 5, dadurch gekennzeichnet, daß als Reinigungsgas ein Gasgemisch aus $O_2$ mit einem Zusatz von 5 bis 50 Vol.% der Schwefel-Sauerstoff-Halogen-Verbindung eingesetzt wird.

7. Verfahren nach den Ansprüchen 1 bis 6, dadurch gekennzeichnet, daß der Reinigungszyklus mit den Schritten Durchspülen der Vorrichtung mit Reinigungsgas und Evakuieren der Vorrichtung, bis die im Grünkörper enthaltenen Gase entfernt sind, wiederholt wird, bis eine hinreichend kleine Verunreinigungskonzentration über den gesamten Querschnitt des Grünkörpers erreicht ist.

8. Verfahren nach Anspruch 7, dadurch gekennzeichnet, daß mit Zyklen in einem Takt von Spüldauer : Evakuierungsdauer im Bereich von 1:1 bis 20:1 gearbeitet wird.

9. Verfahren nach Anspruch 8, dadurch gekennzeichnet, daß mit einem Takt von 5:1 mit einer Spüldauer von 5 min und einer Evakuierungsdauer von 1 min gearbeitet wird.

10. Verfahren nach mindestens einem der vorhergehenden Ansprüche, dadurch gekennzeichnet, daß die Verunreinigungen im Grünkörper bei einer Temperatur im Bereich von 350 bis 450° in flüchtige Komplexverbindungen überführt werden.

11. Verfahren nach mindestens einem der vorhergehenden Ansprüche, dadurch gekennzeichnet, daß für einen Reinigungszyklus eine Menge an Reinigungsgas eingespült wird, die größer ist als das Porenvolumen des zu reinigenden Grünkörpers.

12. Verfahren nach den Ansprüchen 6 und 10, dadurch gekennzeichnet, daß als Reinigungsgas ein Gasgemisch aus bei einer Temperatur von 20°C mit Thionylchlorid gesättigtem $O_2$ eingesetzt wird, mit dem der Reinigungsprozeß bei einer Temperatur von 420°C durchgeführt wird.

13. Verfahren nach mindestens einem der Ansprüche 1 bis 12, dadurch gekennzeichnet, daß die hergestellten, gereinigten Glaskörper als Vorform für optische Wellenleiter verwendet werden.

14. Verfahren nach mindestens einem der Ansprüche 1 bis 12, dadurch gekennzeichnet, daß die hergestellten, gereinigten Glaskörper für Lampenkolben, insbesondere für Halogen- oder Gasentladungslampen verwendet werden.


**Patentansprüche für die Vertragsstaaten: DE, FR, GB, IT, NL, SE**

1. Verfahren zur Herstellung von Glas- oder keramischen Körpern, bei dem aus dem Ausgangsmaterial ein offenporiger Grünkörper geformt wird, der in einem mit im Grünkörper, vorhandenen Verunreinigungen reagierenden erhitzten Reinigungsgas einem Reinigungsprozeß unterzogen wird, derart, daß die Vorrichtung, in der sich der zu reinigende Grünkörper befindet, mit strömendem Reinigungsgas durchspült, dann abgeschlossen und anschließend solange evakuiert wird, bis die in dem offenporigen Grünkörper enthaltenen Gase in Form von Reinigungsgas und gasförmigen Reaktionsprodukten entfernt sind, wonach der gereinigte Grünkörper gesintert wird, dadurch gekennzeichnet, daß metallische Verunreinigungen in Form von Elementen der Gruppen Ib, Va, VIa, VIIa und/oder VIII des Periodischen Systems der Elemente (PSE) mittels eines Reinigungsgases, bestehend aus einem mit einer Schwefel-Sauerstoff-Halogen-Verbindung gesättigten Trägergas bei einer Temperatur im Bereich von 200 bis 500°C in flüchtige Komplexverbindungen überführt werden.

2. Verfahren nach Anspruch 1, dadurch gekennzeichnet, daß zur Reinigung von Grünkörpern aus oxidischen Ausgangsmaterialien als Trägergas Sauerstoff eingesetzt wird.

3. Verfahren nach Anspruch 1, dadurch gekennzeichnet, daß metallische Verunreinigungen in Form Kupfer, Vanadium, Chrom, Molybdän, Wolfram, Mangan, Eisen, Kobalt oder Nickel reaktiv verflüchtigt werden.

4. Verfahren nach Anspruch 3, dadurch gekennzeichnet, daß als Schwefel-Sauerstoff-Halogen-Verbindung Thionylchlorid eingesetzt wird.

5. Verfahren nach Anspruch 3, dadurch gekennzeichnet, daß als Schwefel-Sauerstoff-Halogen-Verbindung Sulfurylchlorid eingesetzt wird.

6. Verfahren nach den Ansprüchen 1 bis 5, dadurch gekennzeichnet, daß als Reinigungsgas ein Gasgemisch aus $O_2$ mit einem Zusatz von 5 bis 50 Vol.% der Schwefel-Sauerstoff-Halogen-Verbindung eingesetzt wird.

7. Verfahren nach den Ansprüchen 1 bis 6, dadurch gekennzeichnet, daß der Reinigungszyklus mit den Schritten Durchspülen der Vorrichtung mit Reinigungsgas und Evakuieren der Vorrichtung, bis die im Grünkörper enthaltenen Gase entfernt sind, wiederholt wird, bis eine hinreichend kleine Verunreinigungskonzentration über den gesamten Querschnitt des Grünkörpers erreicht ist.

5

8. Verfahren nach Anspruch 7, dadurch gekennzeichnet, daß mit Zyklen in einem Takt von Spüldauer : Evakuierungsdauer im Bereich von 1:1 bis 20:1 gearbeitet wird.

9. Verfahren nach Anspruch 8, dadurch gekennzeichnet, daß mit einem Takt von 5:1 mit einer Spüldauer von 5 min und einer Evakuierungsdauer von 1 min gearbeitet wird.

10. Verfahren nach mindestens einem der vorhergehenden Ansprüche, dadurch gekennzeichnet, daß die Verunreinigungen im Grünkörper bei einer Temperatur im Bereich von 350 bis 450°C in flüchtige Komplexverbindungen überführt werden.

11. Verfahren nach mindestens einem der vorhergehenden Ansprüche, dadurch gekennzeichnet, daß für einen Reinigungszyklus eine Menge an Reinigungsgas eingespült wird, die größer ist als das Porenvolumen des zu reinigenden Grünkörpers.

12. Verfahren nach den Ansprüchen 6 und 10, dadurch gekennzeichnet, daß als Reinigungsgas ein Gasgemisch aus bei einer Temperatur von 20°C mit Thionylchlorid gesättigtem $O_2$ eingesetzt wird, mit dem der Reinigungsprozeß bei einer Temperatur von 420°C durchgeführt wird.

13. Verfahren nach mindestens einem der Ansprüche 1 bis 12, dadurch gekennzeichnet, daß die hergestellten, gereinigten Glaskörper als Vorform für optische Wellenleiter verwendet werden.

14. Verfahren nach mindestens einem der Ansprüche 1 bis 12, dadurch gekennzeichnet, daß die hergestellten, gereinigten Glaskörper für Lampenkolben, insbesondere für Halogen- oder Gasentladungslampen verwendet werden.

## Claims for the contracting states: DE, FR, GB, IT, NL, SE

1. A method of manufacturing glass or ceramic bodies, in which an open-pore green body is formed from the starting material and is subjected to a purification process in a heated purification gas reacting with impurities present in the green body, in such a manner that the device in which the green body to be purified is present, is rinsed with flowing purification gas, is then sealed and subsequently evacuated until the gases present in the open-pore green body are removed in the form of purification gas and gaseous reaction products, after which the purified green body is sintered, characterized in that metallic impurities in the form of elements of the groups Ib, Va, VIa, VIIa and/or VIII of the Periodic Table of Elements (PTE) are converted into volatile complex compounds at a temperature in the range from 200 to 500°C by means of a purification gas consisting of a carrier gas saturated with a sulphur-oxygen-halogen compound.

2. A method as claimed in Claim 1, characterized in that oxygen is used as a carrier gas for the purification of green bodies of oxidic starting materials.

3. A method as claimed in Claim 1, characterized in that metallic impurities in the form of copper, vanadium, chromium, molybdenum, tungsten, manganese, iron, cobalt or nickel are reactively volatilized.

4. A method as claimed in Claim 3, characterized in that thionyl chloride is used as a sulphur-oxygen-halogen compound.

5. A method as claimed in Claim 3, characterized in that sulphuryl chloride is used as a sulphur-oxygen-halogen compound.

6. A method as claimed in Claims 1 to 5, characterized in that a gas mixture of $O_2$ with an addition of 5 to 50 % by volume of the sulphur-oxygen-halogen compound is used as a purification gas.

7. A method as claimed in Claims 1 to 6, characterized in that the purification cycle with the steps of rinsing the device with purification gas and evacuating the device until the gases present in the green body have been removed is repeated until a sufficiently small impurity concentration over the whole cross-section of the green body has been reached.

8. A method as claimed in Claim 7, characterized in that cycles in a ratio of rinsing duration: evacuation duration in the range from 1:1 to 20:1 are used.

9. A method as claimed in Claim 8, characterized in that a ratio of 5:1 with a rinsing duration of 5 minutes and an evacuation duration of 1 minute is used.

10. A method as claimed in at least one of the preceding Claims, characterized in that the impurities in the green body are converged into volatile complex compounds at a temperature in the range from 350 to 450°C.

11. A method as claimed in at least one of the preceding Claims, characterized in that a quantity of gas which is larger than the pore volume of the green body to be purified is used for a purification cycle.

12. A method as claimed in Claims 6 and 10, characterized in that a gas mixture of $O_2$ saturated with thionyl chloride at a temperature of 20°C is used as a purification gas and in that the purification process is carried out at a temperature of 420°C.

13. A method as claimed in at least one of the Claims 1 to 12, characterized in that the purified glass bodies manufactured are used as preforms for optical waveguides.

14. A method as claimed in at least one of the Claims 1 to 12, characterized in that the purified glass bodies manufactured are used for lamp envelopes, in particular for halogen lamps or gas discharge lamps.

**Claims for the contracting states: AT, BE**

1. A method of manufacturing glass or ceramic bodies, in which an open-pore green body is formed from the starting material and is subjected to a purification process in a heated purification gas which contains a sulphur-oxygen-halogen compound and which reacts with impurities present in the green body, after which the purified green body is sintered, characterized in that metallic impurities in the form of elements of the groups Ib, Va, VIa, VIIa and/or VIII of the Periodic Table of Elements (PTE) are converted into volatile complex compounds at a temperature in the range from 200 to 500°C, in that the device in which the green body to be purified is present, is rinsed with flowing purification gas in the form of a carrier gas which is saturated with the sulphur-oxygen-halogen compound after which the device is sealed and subsequently evacuated until the gases present in the open-pore green body are removed in the form of purification gas and gaseous reaction products.

2. A method as claimed in Claim 1, characterized in that oxygen is used as a carrier gas for the purification of green bodies of oxidic starting materials.

3. A method as claimed in Claim 1, characterized in that metallic impurities in the form of copper, vanadium, chromium, molybdenum, tungsten, manganese, iron, cobalt or nickel are reactively volatilized.

4. A method as claimed in Claim 3, characterized in that thionyl chloride is used as a sulphur-oxygen-halogen compound.

5. A method as claimed in Claim 3, characterized in that sulphuryl chloride is used as a sulphur-oxygen-halogen compound.

6. A method as claimed in Claims 1 to 5, characterized in that a gas mixture of $O_2$ with an addition of 5 to 50% by volume of the sulphur-oxygen-halogen compound is used as a purification gas.

7. A method as claimed in Claims 1 to 6, characterized in that the purification cycle with the steps of rinsing the device with purification gas and evacuating the device until the gases present in the green body have been removed is repeated until a sufficiently small impurity concentration over the whole cross-section of the green body has been reached.

8. A method as claimed in Claim 7, characterized in that cycles in a ratio of rinsing duration: evacuation duration in the range from 1:1 to 20:1 are used.

9. A method as claimed in Claim 8, characterized in that a ratio of 5:1 with a rinsing duration of 5 minutes and an evacuation duration of 1 minute is used.

10. A method as claimed in at least one of the preceding Claims, characterized in that the impurities in the green body are converted into volatile complex compounds at a temperature in the range from 350 to 450°C.

11. A method as claimed in at least one of the preceding Claims, characterized in that a quantity of purification gas which is larger than the pore volume of the green body to be purified is used for a purification cycle.

12. A method as claimed in Claims 6 and 10, characterized in that a gas mixture of $O_2$ saturated with tionyl chloride at a temperature of 20°C is used as a purification gas and in that the purification process is carried out at a temperature of 420°C.

13. A method as claimed in at least one of the Claims 1 to 12, characterized in that the purified glass bodies manufactured are used as preforms for optical waveguides.

14. A method as claimed in at least one of the Claims 1 to 12, characterized in that the purified glass bodies manufactured are used for lamp envelopes, in particular for halogen lamps of gas discharge lamps.

**Revendications pour les états contractants: DE, FR, GB, IT, NL, SE**

1. Procédé pour la réalisation de corps céramiques ou en verre selon lequel un semiproduit à pores ouverts est formé à partir du matériau de départ et soumis à un processus de purification dans un gaz de purification chauffé réagissant avec les impuretés présentes dans le semiproduit de façon que le dispositif dans lequel se trouve le semiproduit à purifier soit rincé avec du gaz de purification en circulation, puis fermé et ensuite évacué jusqu'à ce que les gaz sous forme de gaz de purification et de produits de réaction gazeux présents dans les semiproduits à pores ouverts soient chassés, après quoi le semiproduit purifié est fritté, caractérisé en ce que des impuretés métalliques sous forme d'éléments des groupes Ib, Va, VIa, VIIa et/ou VIII de la classification périodique des éléments chimiques sont transformées en composés complexes volatiles à l'aide d'un gaz de purification constitué par un gaz de support saturé d'un composé de soufre-oxygène-halogène à une température comprise entre 200 et 500°C.

2. Procédé selon la revendication 1, caractérisé en ce que de l'oxygène est utilisé comme gaz de support, pour la purification de semiproduits en matériau de départ oxydique.

3. Procédé selon la revendication 1, caractérisé en ce que des impuretés métalliques sous forme de cuivre, vanadium, chrome, molybdène, tungstène, manganèse, fer, cobalt ou nickel sont volatilisées par voie réactive.

4. Procédé selon la revendication 3, caractérisé en ce que du chlorure de thionyle est utilisé comme composé de soufre-oxygène-halogène.

5. Procédé selon la revendication 3, caractérisé en ce que du chlorure de sulfuryle est utilisé comme composé de soufre-oxygène-halogène.

6. Procédé selon les revendications 1 à 5, caractérisé en ce qu'un mélange de gaz constitué par $O_2$ additionné de 5 à 50% en volume du composé de soufre-oxygène-halogène est utilisé comme gaz de purification.

7. Procédé selon les revendications 1 à 6, caractérisé en ce que le cycle de purification comprenant les étapes de rinçage du dispositif avec du gaz de purification et l'évacuation du dispositif jusqu'à ce que les gaz contenus dans les semi-produits soient chassés, est répété jusqu'à l'obtention d'une concentration d'impuretés suffisamment réduite sur toute la section du semiproduit.

8. Procédé selon la revendication 7, caractérisé en ce qu'on travaille avec des cycles dans un rapport durée de rinçage : durée d'évacuation compris entre 1:1 et 20:1.

9. Procédé selon la revendication 8, caractérisé en ce qu'on travaille avec un rapport de 5:1, la durée de rinçage étant de 5 minutes et la durée d'évacuation étant de 1 minute.

10. Procédé selon au moins l'une des revendications précédentes, caractérisé en ce que les impuretés dans le semi-produit sont transformées en composés complexes volatiles à une température comprise entre 350 et 400°C.

11. Procédé selon au moins l'une des revendications précédentes, caractérisé en ce que pour un cycle de purification, la quantité de gaz de purification introduit pour le rinçage est supérieure au volume des pores des semiproduits à purifier.

12. Procédé selon les revendications 6 et 10, caractérisé en ce que comme gaz de purification est utilisé un mélange de gaz constitué par $O_2$ saturé de chlorure de thionyle à une température de 20°C avec lequel s'effectue le processus de purification à une température de 420°C.

13. Procédé selon au moins l'une des revendications 1 à 12, caractérisé en ce que les corps en verre réalisés, purifiés sont utilisés comme préforme pour des guides d'ondes optiques.

14. Procédé selon au moins l'une des revendications 1 à 12, caractérisé en ce que les corps en verre réalisés, purifiés sont utilisés pour des ampoules de lampe, notamment pour les lampes à décharge dans le gaz ou à l'halogène.

**Revendications pour les états contractants: AT, BE**

1. Procédé pour la fabrication de corps céramiques ou en verre selon lequel un semiproduit à pores ouverts est formé à partir du matériau de départ et soumis à un processus de purification dans un gaz de purification chauffé contenant un composé de soufre-oxygène-halogène et réagissant avec les impuretés présentes dans le semiproduit et ensuite fritté, caractérisé en ce que des impuretés métalliques sous forme d'éléments des groupes Ib, Va, VIa, VIIa et/ou VIII du système périodique des éléments chimiques sont transformées en composés complexes volatiles à une température située dans la gamme comprise entre 200 et 500°C, du fait que le dispositif contenant le semiproduit à purifier est rincé avec du gaz de purification en circulation sous forme d'un gaz de support saturé du composé de soufre-oxygène-halogène, après quoi il est fermé et ensuite évacué jusqu'à ce que les gaz sous forme de gaz de purification et de produits de réaction gazeux contenus dans le semiproduit à pores ouverts soient éliminés.

2. Procédé selon la revendication 1, caractérisé en ce que de l'oxygène est utilisé comme gaz de support pour la purification de semiproduits en matériaux de départ oxydiques.

3. Procédé selon la revendication 1, caractérisé en ce que des impuretés métalliques sous forme de cuivre, vanadium, chrome, molybdène, tungstène, manganèse, fer, cobalt ou nickel sont volatilisées par voie réactive.

4. Procédé selon la revendication 3, caractérisé en ce que du chlorure de thionyle est utilisé comme composé de soufre-oxygène-halogène.

5. Procédé selon la revendication 3, caractérisé en ce que du chlorure de sulfuryle est utilisé comme composé de soufre-oxygène-halogène.

6. Procédé selon les revendications 1 à 5, caractérisé en ce qu'un mélange de gaz constitué par $O_2$ additionné de 5 à 50% en volume du composé de soufre-oxygène-halogène est utilisé comme gaz de purification.

7. Procédé selon les revendications 1 à 6, caractérisé en ce que le cycle de purification comprenant les étapes de rinçage du dispositif avec du gaz de purification et l'évacuation du dispositif jusqu'à ce que les gaz contenus dans les semi-produits soient chassés, est répété jusqu'à l'obtention d'une concentration d'impuretés suffisamment réduite sur toute la section du semiproduit.

8. Procédé selon la revendication 7, caractérisé en ce qu'on travaille avec des cycles dans un rapport durée de rinçage : durée d'évacuation compris entre 1:1 et 20:1.

9. Procédé selon la revendication 8, caractérisé en ce qu'on travaille avec un rapport de 5:1, la durée de rinçage étant de 5 minutes et la durée d'évacuation étant de 1 minute.

10. Procédé selon au moins l'une des revendications précédentes, caractérisé en ce que les impuretés dans le semi-produit sont transformées en composés complexes volatiles à une température comprise entre 350 et 400°C.

11. Procédé selon au moins l'une des revendications précédentes, caractérisé en ce que pour un cycle de purification, la quantité de gaz de purification introduit pour le rinçage est supérieure au volume des pores des semiproduits à purifier.

12. Procédé selon les revendications 6 et 10, caractérisé en ce que comme gaz de purification est utilisé un mélange de gaz constitué par $O_2$ saturé de chlorure de thionyle à une température de 20°C avec lequel s'effectue le processus de purification à une température de 420°C.

13. Procédé selon au moins l'une des revendications 1 à 12, caractérisé en ce que les corps en verre réalisés, purifiés sont utilisés comme préforme pour des guides d'ondes optiques.

14. Procédé selon au moins l'une des revendications 1 à 12, caractérisé en ce que les corps en verre réalisés, purifiés sont utilisés pour des ampoules de lampe, notamment pour les lampes à décharge dans le gaz ou à l'halogène.